# EUROPÄISCHE PATENTANMELDUNG

(11) **EP 1 309 105 A1**
(43) Veröffentlichungstag der Anmeldung: **07.05.2003**
(21) Anmeldenummer: 01811066.8
(22) Anmeldetag: 01.11.2001
(51) Int. Cl.: H04B 7/185

(54) **Satelliten/Zellular zwei Betriebsart Endgerät**

(71) Anmelder: Ascom Systec AG, 5506 Mägenwil (CH)
(72) Erfinder: Widmer, Hanspeter, 5507 Mellingen (CH)
(74) Vertreter: Roshardt, Werner Alfred, Dipl.-Phys.

(57) **Zusammenfassung**

Ein mobiles Fernmeldeendgerät (30) ist mit einer Sender- und einerAntennenvorrichtung versehen, die zum Senden von in einem terrestrischen Mobilfunkkommunikationssystem empfangbaren digitalen Sprach- und Datensignalen ausgebildet sind. Die Leistung der ausgesendeten Signale ist begrenzt, so dass eine vorgegebene maximale Sendeleistung nicht überschritten wird. Das mobile Fernmeldeendgerät (10) weist ferner Mittel zur Erzeugung eines weiteren digitalen Datensignals auf, das eine für die Satellitenfunkkommunikation vorgesehene Trägerfrequenz und eine im Vergleich zu den Datenraten der für das terrestrische Mobilfunkkommunikationssystem ausgesendeten Signale reduzierte Datenrate hat. Die Datenrate dieses weiteren Datensignals ist derart reduziert, dass- wenn dieses weitere Datensignal mittels der Sender- undAntennenvorrichtung mit höchstens der maximalen Sendeleistung ausgesendet wird - die Signalenergie pro Datenbit des weiteren Datensignals für den Empfang dieses Datensignals durch einen Satelliten (30) eines Satellitenfunkkommunikationssystems ausreichend ist. Das mobile Fernmeldeendgerät (10) ist vergleichsweise klein, handlich und kostengünstig und ist dennoch geografisch weit verbreitet einsetzbar.

## Beschreibung

### Technisches Gebiet

Die Erfindung betrifft ein mobiles Fernmeldeendgerät gemäss dem Oberbegriff des Anspruchs 1 und ein Verfahren für den Betrieb eines solchen.

### Stand der Technik

Terrestrische Mobilfunkkommunikationssysteme (auch als terrestrische Mobilfunksysteme oder nicht ganz zutreffend als terrestrische Mobilfunktelefonsysteme bezeichnet) sind nicht immer, aber häufig zellulare Systeme mit einem zellenartig strukturierten Abdeckungsgebiet (z.B. GSM-Systeme). In jeder Zelle kommunizieren mobile Fernmeldeendgeräte über eine Funk-Schnittstelle (air interface) mit einer ortsfesten Basisstation (base station). Als mobiles Fernmeldeendgerät wird ein Fernmeldeendgerät bezeichnet, das zur Kommunikation elektromagnetische Wellen über eine Funk-Schnittstelle (air interface) sendet und/oder empfängt. Ein mobiles Fernmeldeendgerät (mobile terminal) kann insbesondere ein Funktelefon, ein Telefaxgerät, ein Datenübertragungsmodem o.ä. sein, wobei ein mobiles Funktelefon häufig auch alsHandfunktelefon, Mobilfunktelefon oder auf englisch als "mobile phone" oder "mobile station" bezeichnet wird. Die Basisstation kann über geeignete Kommunikationsverbindungen (z.B. drahtgebundene Fernmeldeverbindungen, Richtstrahlverbindungen, Funkverbindungen usw.) mit weiteren Zellen des gleichen Mobilfunksystems und/oder anderen Fernmeldesystemen verbunden sein. Typische Reichweiten bei Mobilfunksystemen (d.h. Zellenradien bei zellularen Systemen) liegen im Bereich von wenigen km bis ca. 50 km. Aufgrund der zellularen Struktur solcher Systeme haben die dafür geeigneten mobilen Fernmeldeendgeräte bloss eine vergleichsweise kleine Funkreichweite, was wiederum den Einsatz von kleinen, handlichen und kostengünstigen mobilen Fernmeldeendgeräten ermöglicht.

Ein Nachteil von zellularen terrestrischen Mobilfunkkommunikationssystemen besteht in ihrer beschränkten geografischen Verfügbarkeit. Telekommunikationsverbindungen von und zu einem mobilen Fernmeldeendgerät sind nur möglich, wenn sich dieses im Funk-Abdeckungsbereich einer Basisstation befindet, zu der es Zugang hat. In abgelegenen ländlichen Gebieten und/oder in mobilfunkkommunikationsmässig rückständigen Ländern ist dies häufig nicht der Fall.

Eine wesentlich bessere geografische Abdeckung wird durch Satellitenfunkkommunikationssysteme (d.h. satellitengestützte Mobilfunkkommunikationssysteme) gewährleistet. Zur Herstellung einer Telekommunikationsverbindung in einem solchen System ist es i.d.R. ausreichend, dass ein Satellitenfunkfernmeldeendgerät wie z.B. ein Satellitenfunktelefon (auch als Satellitentelefon bezeichnet) Sichtverbindung zu wenigstens einem Satelliten des Satellitenfunkkommunikationssystems hat. Satellitenfunkkommunikationssysteme gewährleisten deshalb eine grossflächige Abdeckung für weite Gebiete der Erde. Als nachteilig erweist sich jedoch, dass die Satellitenfunkfernmeldeendgeräte über eine vergleichsweise grosse Funkreichweite verfügen müssen, um eine Funk-Verbindung zum Satelliten herstellen zu können. Diese grosse Funkreichweite erfordert den Einsatz von starken Sendern und/oder grossen Antennen, was die Satellitenfunkfernmeldeendgeräte vergleichsweise gross, schwer und teuer macht.

Kombinierte mobile Fernmeldeendgeräte wie z.B. Mobilfunktelefone (auch als Dualmode-Handfunktelefone bezeichnet), die für den Einsatz sowohl in einem terrestrischen Mobilfunkkommunikationssystem als auch in einem Satellitenfunkkommunikationssystem geeignet sind, sind in der Regel noch teurer, grösser und schwerer als reine Satellitentelefone, da solche Dualmode-Handfunktelefone nebst den für das Satellitenfunkkommunikationssystem benötigten Gerätekomponenten häufig noch einige zusätzliche Gerätekomponenten (z.B. Antenne) aufweisen, die spezifisch für das terrestrische Mobilfunkkommunikationssystem ausgebildet sind. Dualmode-Handfunktelefone, die für den Betrieb sowohl in einem Satellitenfunkkommunikationssystem als auch in einem terrestrischen Mobilfunkkommunikationssystem geeignet sind, sind z.B. in den Druckschriften WO 01/37368 und WO 97/50269 beschrieben.

### Darstellung der Erfindung

Aufgabe der Erfindung ist die Angabe eines mobilen Fernmeldeendgeräts, das vergleichsweise klein, handlich und kostengünstig ist und dennoch geografisch weit verbreitet einsetzbar ist.

Die Lösung der Aufgabe ist durch die Merkmale des Anspruchs 1 definiert. Gemäss der Erfindung ist ein mobiles Fernmeldeendgerät mit einer Sender- und einer Antennenvorrichtung versehen, die zum Senden von in einem terrestrischen Mobilfunkkommunikationssystem empfangbaren digitalen Sprach- und Datensignalen ausgebildet sind. D.h., dass die Signalparameter (z.B. die Trägerfrequenz, die Modulationsart usw.) dieser Sprach- und Datensignale irgend einem der für terrestrische Mobilfunkkommunikationssysteme vorgesehenen Standards entsprechen und ihre Datenrate ausreichend ist, um Telefonie (d.h. die Übertragung von Sprachsignalen in Echtzeit) in gewohnter Sprachqualität im Vollduplexbetrieb zu ermöglichen. Wie für terrestrische mobile Fernmeldeendgeräte üblich ist die Leistung der ausgesendeten Signale begrenzt, so dass eine vorgegebene maximale Sendeleistung nicht überschritten wird. Das mobile Fernmeldeendgerät weist ferner Mittel zur Erzeugung eines weiteren digitalen Datensignals auf, das eine für die Satellitenfunkkommunikation vorgesehene Trägerfrequenz und eine im Vergleich zu den Datenraten der für das terrestrische Mobilfunkkommunikationssystem ausgesendeten Signale reduzierte Datenrate hat. Die Datenrate (auch als Bitrate bezeichnet) dieses weiteren Datensignals ist derart reduziert, dass - wenn dieses weitere Datensignal mittels der Sender- und Antennenvorrichtung mit höchstens der maximalen Sendeleistung ausgesendet wird - die Signalenergie pro Datenbit des weiteren Datensignals für den Empfang dieses Datensignals durch einen Satelliten eines Satellitenfunkkommunikationssystems ausreichend ist.

Indem beim erfindungsgemässen mobilen Fernmeldeendgerät die Datenrate des für den Empfang durch den Satelliten vorgesehenen weiteren Datensignals reduziert ist, kann dieses weitere Datensignal mit einer wesentlich kleineren Sendeleistung ausgesendet werden, als dies bei bisherigen für die Satellitenkommunikation ausgebildeten mobilen Fernmeldeendgeräten der Fall war. Massgeblich für die Reichweite eines digitalen Signals ist nämlich nicht allein die Sendeleistung des ausgesendeten Signals, sondern vielmehr die ausgesendete Energie pro Datenbit. Durch die Reduktion der Datenrate des zum Satelliten gesendeten Datensignals wird insbesondere die Möglichkeit geschaffen, auch mittels eines mobilen Fernmeldeendgeräts, dessen Sendeleistung auf einen für terrestrische mobile Fernmeldeendgeräte üblichen Wert begrenzt ist, Daten zu einem Satelliten zu übertragen.

Selbstverständlich geht mit der Reduktion der Datenrate auch eine Reduktion der Informationsmenge einher, die pro Zeiteinheit mittels des weiteren Datensignals zum Satelliten übertragbar ist. Diese reduzierte Übertragungskapazität kann z.B. dazu führen, dass das weitere Datensignal eines erfindungsgemässen mobilen Fernmeldeendgeräts für bestimmte zeitkritische Kommunikationsanwendungen, wie z.B. die Übertragung von Sprachsignalen in einem Vollduplex-Betrieb, nicht mehr verwendbar ist. Es gibt jedoch andere, weniger zeitkritische Kommunikationsanwendungen, wie z.B. die Übermittlung von SMS- (Short Message Service) oder E-Mail- (Electronic Mail) Nachrichten (umgangssprachlich häufig auch lediglich als SMS bzw. E-Mail bezeichnet), für welche die reduzierte Übertragungskapazität bei weitem ausreicht. Für solche Kommunikationsanwendungen gewährleistet das erfindungsgemässe mobile Fernmeldeendgerät einen wesentlich grösseren geografischen Einsatzbereich als die bisher bekannten mobilen Fernmeldeendgeräte, die zur Verwendung ausschliesslich in terrestrischen Mobilfunkkommunikationssystemen ausgebildet sind.

Es können irgendwelche digitale Daten mittels des weiteren Datensignals zum Satelliten übertragen werden. Solche Daten können insbesondere auch Daten von gesprochener Sprache sein. Somit ist es grundsätzlich möglich, mittels des weiteren Datensignals auch digitalisierte Sprache zum Satelliten zu übertragen, wobei jedoch aufgrund der verminderten Datenrate eine starke Datenkompression erforderlich ist und ein Vollduplex-Betrieb in der für die Telefonie in terrestrischen Mobilfunkkommunikationssystemen üblichen Sprachqualität nicht möglich ist.

Im Unterschied zu bisher bekannten mobilen Fernmeldeendgeräten wie z.B. Mobilfunktelefonen, die für den kombinierten Einsatz sowohl in einem terrestrischen Mobilfunkkommunikationssystem als auch in einem Satellitenfunkkommunikationssystem geeignet sind, benötigt ein erfindungsgemässes mobiles Fernmeldeendgerät für die Datenübertragung zum Satelliten weder eine spezifisch für die Satellitenkommunikation ausgebildete Sendervorrichtung, welche Datensignale mit einer vergleichsweise grossen Sendeleistung erzeugt, noch einen zusätzlichen Signalverstärker, der die Sendeleistung von Daten von einem für terrestrische Mobilfunkkommunikationssysteme üblichen Niveau auf ein für Satellitenfunkkommunikationssysteme übliches Niveau verstärkt. Es kann vielmehr eine Sendervorrichtung verwendet werden, die im Wesentlichen gleich wie eine Sendervorrichtung für ein heute übliches mobiles Fernmeldeendgerät (z.B. ein Handfunktelefon) ausgebildet ist, das zur Verwendung ausschliesslich in terrestrischen Mobilfunkkommunikationssystemen vorgesehen ist. Solche mobilen Fernmeldeendgeräte sind in der Regel zur Verwendung in verschiedenen Mobilfunkkommunikationssystemen ausgebildet, die jeweils mit Trägerfrequenzen in unterschiedlichen Frequenzbändern betrieben werden, so z.B. in den drei für GSM-Mobilfunkkommunikationssysteme reservierten Frequenzbändern bei 900, 1800 und 1900 MHz. (Im Zusammenhang mit der vorliegenden Beschreibung und den Patentansprüchen bedeutet GSM stets "Global System for Mobile communications"). Bei heutzutage gebräuchlichen mobilen Fernmeldeendgeräten in Form von Mobilfunktelefonen sind die Sendervorrichtungen dieser Mobilfunktelefone vergleichsweise klein, handlich und - da die entsprechenden Mobilfunktelefone in Grossserien hergestellt werden - kostengünstig. Es sind bloss geringfügige Modifikationen erforderlich, um eine solche bekannte Sendervorrichtung zur Verwendung als Sendervorrichtung für ein erfindungsgemässes mobiles Fernmeldeendgerät, insbesondere ein Mobilfunktelefon, geeignet zu machen. Die Sendervorrichtung für ein erfindungsgemässes Mobilfunktelefon muss zum Aussenden von Datensignalen mit Trägerfrequenzen in wenigstens einem für terrestrische Mobilfunkkommunikationssysteme vorgesehenen Frequenzband und in wenigstens einem für Satellitenfunkkommunikationssysteme vorgesehenen Frequenzband ausgebildet sein. D.h., es muss neu lediglich die Möglichkeit zum Aussenden von Datensignalen in einem für Satellitenfunkkommunikationssysteme vorgesehenen Frequenzband bereit gestellt werden, ansonsten kann die Sendervorrichtung für das erfindungsgemässe Mobilfunktelefon gleich ausgebildet sein wie die Sendervorrichtung eines gebräuchlichen, ausschliesslich für den Betrieb in terrestrischen Mobiifunkkommunlkationssystemen vorgesehenen Mobilfunktelefons. Folglich weist das erfindungsgemässe Mobilfunktelefon im Vergleich zu bekannten Satellitentelefonen ähnliche Vorteile hinsichtlich der Handlichkeit, der Gerätegrösse und der Herstellungskosten auf wie bekannte Mobilfunktelefone, die zur Verwendung ausschliesslich in terrestrischen Mobilfunkkommunikationssystemen ausgebildet sind.

Vorzugsweise sind die Mittel zur Erzeugung des weiteren Datensignals derart ausgebildet, dass die Datenrate des weiteren Datensignals solchermassen reduziert ist, dass die Signalenergie pro Datenbit des weiteren Datensignals für den Empfang dieses Datensignals durch einen geostationären Satelliten eines Satellitenfunkkommunikationssystems wie z.B. "Thuraya", "ACeS" oder "Inmarsat" ausreichend ist. Geostationäre Satelliten befinden sich zwar typischerweise in einer wesentlich grösseren Entfernung von der Erdoberfläche und somit von auf der Erde benutzten mobilen Fernmeldeendgeräten als die sogenannten LEO-Satelliten (LEO = "Low Earth Orbit"). Zur Erreichung von geostationären Satelliten mittels Funksignalen wäre deshalb bei gleichem Antennengewinn und gleicher Empfängerempfindlichkeit eine grössere Signalenergie pro Bit erforderlich als zur Erreichung eines LEO-Satelliten. In der Regel sind aber der Antennengewinn und die Empfängerempfindlichkeit bei einem geostationären Satelliten wesentlich grösser als bei einem LEO-Satelliten, so dass letztendlich beide Satellitentypen mit ungefähr der gleichen Signalenergie pro Bit erreichbar sind. Im Unterschied zu LEO-Satelliten sind jedoch bei geostationären Satelliten die durch Relativbewegungen zwischen den Satelliten und den mobilen Fernmeldeendgeräten verursachten Dopplerverschiebungen der Frequenzen der Funksignale und die daraus folgenden Probleme klein. LEO- und geostationäre Satelliten unterscheiden sich weiter hinsichtlich ihrer geografischen Abdeckung. Geostationäre Satelliten decken im Wesentlichen diejenigen Gebiete auf der Erde ab, die von ihrer stationären Position über dem Äquator aus sichtbar sind. Somit werden äquatorferne Gebiete von geostationären Satelliten schlecht oder überhaupt nicht abgedeckt. Immerhin weisen geostationäre Satelliten den Vorteil auf, dass ihre Position den Benutzern von mobilen Fernmeldeendgeräten auf der Erde in der Regel bekannt ist, was den Einsatz von Richtantennen für die mobilen Fernmeldeendgeräte ermöglicht. Demgegenüber decken LEO-Satelliten wenigstens zeitweise sämtliche unter ihrem Orbit liegenden Gebiete auf der Erde ab. Zur Herstellung einer Kommunikationsverbindung zu einem mobilen Fernmeldeendgerät auf der Erde muss aber jeweils wenigstens ein LEO-Satellit über dem vom aktuellen Standort des Fernmeldeendgeräts aus sichtbaren Horizont positioniert sein.

Grundsätzlich ist es jedoch auch möglich, dass die Datenrate des weiteren Datensignals eines erfindungsgemässen mobilen Fernmeldeendgeräts derart reduziert ist, dass die Signalenergie pro Datenbit des weiteren Datensignals für den Empfang dieses Datensignals durch einen LEO-Satelliten eines Satellitenfunkkommunikationssystems wie z.B. "Iridium" oder "Globalstar" ausreichend ist.

Gemäss einer bevorzugten Ausführungsart der Erfindung weist die Antennenvorrichtung eines erfindungsgemässen mobilen Fernmeldeendgeräts lediglich eine einzige Antenne auf, die sowohl zum Senden der im terrestrischen Mobilfunkkommunikationssystem empfangbaren digitalen Sprach- und Datensignale als auch zum Senden des durch den Satelliten empfangbaren weiteren Datensignals ausgebildet ist. Ein solches mobiles Fernmeldeendgerät zeichnet sich durch eine besonders einfache und kostengünstige Konstruktion aus. Es kann rein äusserlich gleich wie ein gebräuchliches mobiles Fernmeldeendgerät ausgebildet sein, das zur Verwendung ausschliesslich in terrestrischen Mobilfunkkommunikationssystemen vorgesehen ist. Die Antenne eines Fernmeldeendgeräts gemäss dieser Ausführungsart der Erfindung kann dabei entweder ausziehbar am Fernmeldeendgerät angebaut sein, oder sie kann fest im Fernmeldeendgerät eingebaut sein, wobei sie im letzteren Fall sichtbar oder unsichtbar im Fernmeldeendgerät eingebaut sein kann. Zur Erhöhung des Antennengewinns ist die Verwendung eines zusätzlichen parasitären passiven Antennenhilfselements, z.B. eines Reflektors, möglich. Ein solches Antennenhilfselement kann z.B. ausziehbar am Fernmeldeendgerät angebaut oder im Fernmeldeendgerät eingebaut sein. Es kann aber derart ausgebildet sein, dass es wahlweise wieder lösbar an der Antenne des Fernmeldeendgeräts montierbar und in demontiertem Zustand z.B. in einer Schutzhülle des Fernmeldeendgeräts verstaubar ist.

Als Alternative zu einem mobilen Fernmeldeendgerät mit lediglich einer einzigen Antenne kann jedoch ein mobiles Fernmeldeendgerät gemäss der Erfindung grundsätzlich auch mit mehr als einer Antenne versehen sein, so z.B. mit einer ersten Antenne, die für den Einsatz in terrestrischen Mobilfunkkommunikationssystemen optimiert ist, und mit einer zweiten Antenne, die für den Einsatz in Satellitenfunkkommunikationssystemen optimiert ist.

Vorzugsweise ist ein mobiles Fernmeldeendgerät gemäss der Erfindung weiter mit einer Empfängervorrichtung versehen, die derart ausgebildet ist, dass sowohl digitale Sprach- und Datensignale, die vom terrestrischen Mobilfunkkommunikationssystem ausgesendet werden, als auch digitale Sprach- und Datensignale, die vom Satelliten ausgesendet werden, mittels der Antennenvorrichtung und der Empfängervorrichtung empfangbar sind.

Dabei kann die Empfängervorrichtung derart ausgebildet sein, dass die Dynamik und die Rauschzahl der Empfängervorrichtung im Wesentlichen gleich wie die Dynamik und die Rauschzahl der Empfängervorrichtung eines Fernmeldeendgeräts ist, das lediglich zur Verwendung im terrestrischen Mobilfunkkommunikationssystem ausgebildet ist. Für diesen Fall ist es vorteilhaft, wenn der Satellit die Sendeleistung zum Senden der Sprach- und Datensignale erhöhen kann, um die vergleichsweise schlechte Empfängerempfindlichkeit, die deutlich kleiner ist als die Empfängerempfindlichkeit von bisherigen für den Satellitenempfang ausgebildeten Fernmeldeendgeräten, zu kompensieren. Es kann dann eine Empfängervorrichtung verwendet werden, die im Wesentlichen gleich ausgebildet ist wie die Empfängervorrichtung eines gebräuchlichen Fernmeldeendgeräts, das zur Verwendung ausschliesslich in terrestrischen Mobilfunkkommunikationssystemen ausgebildet ist, die in einer Mehrzahl von unterschiedlichen Frequenzbändern (z.B. bei 900 und bei 1800 MHz) betrieben werden. Solche Empfängervorrichtungen sind wesentlich kostengünstiger als die Empfängervorrichtungen von bisherigen Fernmeldeendgeräten für Satellitenfunksysteme.

Die zum Senden des durch den Satelliten empfangbaren weiteren Datensignals vorgesehene Antenne des erfindungsgemässen Fernmeldeendgeräts kann einen Antennengewinn aufweisen, der kleiner als ungefähr 2dBi ist (wobei "dBi" wie üblich den auf eine isotrope Antenne bezogenen Wert in Dezibel bezeichnet). Der Antennengewinn kann sogar kleiner als ungefähr 0 dBi, insbesondere sogar kleiner als ungefähr -6dBi sein. Derart kleine Antennengewinne in den für die Satellitenkommunikation vorgesehenen Frequenzbändern lassen sich auch mit Antennen von gebräuchlichen Fernmeldeendgeräten erreichen, die lediglich für den Einsatz in terrestrischen Mobilfunkkommunikationssystemen vorgesehen sind. Die Antenne zum Senden des durch den Satelliten empfangbaren weiteren Datensignals kann somit gleich ausgebildet sein wie eine Antenne, die lediglich für den Einsatz in terrestrischen Mobilfunkkommunikationssystemen vorgesehen ist. Solche Antennen sind besonders kostengünstig.

Die maximale Sendeleistung EIRP eines erfindungsgemässen mobilen Fernmeldeendgeräts kann auf ungefähr 32 dBm begrenzt sein. Dabei bedeutet EIRP wie üblich die elektromagnetische Leistung, die ein isotroper Strahler zur Erzeugung der gleichen Feldstärke abstrahlen müsste, wie sie durch die effektiv über die Sender- und Antennenvorrichtung abgestrahlte Strahlung erzeugt wird, und dBm ist die Leistungsangabe in Dezibel bezogen auf 1 Milliwatt. In zellularen Mobilfunkkommunikationssystemen ist eine Begrenzung der maximalen Sendeleistung der entsprechenden mobilen Fernmeldeendgeräte auf einen vergleichsweise kleinen Wert erforderlich, um die Wiederverwendung von Frequenzen in einer Mehrzahl von geografisch voneinander distanzierten Zellen zu ermöglichen, ohne dass gegenseitige Störungen auftreten. Nötigenfalls - wenn z.B. ein zellulares Mobilfunkkommunikationssystem mit einer grossen Zellendichte und vergleichsweise kleinen Zellengrössen gewünscht wird, kann die maximale Sendeleistung EIRP eines mobilen Fernmeldeendgeräts gemäss der Erfindung auch auf ungefähr 25 dBm, insbesondere sogar auf ungefähr 14dBm begrenzt sein. Konkret hängt die Begrenzung der maximalen Sendeleistung einerseits von den Gerätekomponenten (insbesondere der Sendervorrichtung und der Antenne) des verwendeten mobilen Fernmeldeendgeräts und andrerseits von gesetzlichen Vorschriften für die Frequenzbänder ab, für deren Verwendung das mobile Fernmeldeendgerät zugelassen ist.

Die Sendervorrichtung eines erfindungsgemässen mobilen Fernmeldeendgeräts kann derart ausgebildet sein, dass die von der Sendervorrichtung ausgesendete Leistung EIRP kleiner als ungefähr 30 dBm ist. Sendervorrichtungen mit einer auf ungefähr 30 dBm begrenzten Sendeleistung EIRP werden üblicherweise für Fernmeldeendgeräte mit Funkschnittstellen auf der Basis von TDMA (Time Division Multiple Access) mit Frequency- und Time Division Duplex eingesetzt, wie z.B. für GSM Geräte.

Die Sendeleistung EIRP einer Sendervorrichtung eines erfindungsgemässen Fernmeldeendgeräts kann aber auch auf ungefähr 20 dBm begrenzt sein. Sendervorrichtungen mit einer auf ungefähr 20 dBm begrenzten Sendeleistung EIRP werden typischerweise für Fernmeldeendgeräte mit Funkschnittstellen auf der Basis von CDMA (Code Division Multiple Access) mit Frequency Division Duplex eingesetzt, wie z.B. für Geräte, die auf einem der Standards UMTS FDD-mode W-CDMA, IS-95 oder cdma2000 basieren.

Gemäss einer Variante der Erfindung sind die Mittel zur Erzeugung des weiteren Datensignals derart ausgebildet, dass die Datenrate dieses für den Empfang durch einen Satelliten vorgesehenen weiteren Datensignals kleiner als 500 bit/s, vorzugsweise sogar kleiner als 100 bit/s ist. Erforderlichenfalls ist es sogar möglich, diese Datenrate auf 50 bit/s zu begrenzen. Die zu wählende Datenrate hängt u.a. vomAntennengewinn der Antenne des mobilen Fernmeldeendgeräts, von der Sensitivität der Antennen- und Empfängereinrichtung des Satelliten und von der Sendeleistung ab, mit welcher das weitere Datensignal vom mobilen Fernmeldeendgerät ausgesendet wird. Vorzugsweise wird die Datenrate jeweils lediglich soweit reduziert, wie es unter den gegebenen Umständen zu Erreichung des Satelliten gerade unbedingt nötig ist, um die Übertragungskapazität nicht übermässig zu vermindern.

Heutige Satellitenhandtelefone arbeiten mit Datenraten bis zu 9000 bit/s. Durch die Begrenzung der Datenrate auf wesentlich kleinere Werte vermindern sich die Anforderungen hinsichtlich der Sendeleistung und/oder des Antennengewinns, welche Fernmeldeendgeräte zur Erreichung der Satelliten in Uplink-Richtung (auch als Rückwärtsstrecke Endgerät-Satellit bezeichnet) erfüllen müssen. So bewirkt z.B. eine Reduktion der Datenrate von 9000 bit/s auf 100 bit/s eine Verminderung der erwähnten Anforderungen um ca. 20 dB. Die Datenübertragung in Downlink-Richtung (d.h. über die Vorwärtsstrecke Satellit-Endgerät) ist weniger kritisch, da im Satelliten im allgemeinen genügend Sendeleistung vorhanden ist. Diese kann jederzeit nach Bedarf erhöht werden, z.B. durch eine Verringerung der Zahl der gleichzeitig aktiven Verkehrskanäle.

Ein mobiles Fernmeldeendgerät gemäss der Erfindung kann zur Verwendung in einem nach dem GSM-Standard und/oder in einem nach dem UMTS-Standard betriebenen terrestrischen Mobilfunkkommunikationssystem ausgebildet sein. D.h., das mobile Fernmeldeendgerät kann zur Kommunikation bzw. zur Datenübertragung mit einem GSM-System bzw. mit einem UMTS-System ausgebildet sein. So können insbesondere die Sender- und die Antennenvorrichtung zum Senden von digitalen Sprach- und Datensignalen mit Trägerfrequenzen in wenigstem einem der für GSM-Uplink-Verbindungen vorgesehenen Frequenzbänder 876 - 915 MHz, 1710 - 1785 MHz und 1850 - 1910 MHz ausgebildet sein. Die Erfindung ist jedoch nicht auf GSM- und/oderUMTS-Systeme beschränkt. Vielmehr ist die Erfindung in vorteilhafter Weise für sämtliche mobilen Fernmeldeendgeräte verwendbar, die für den Betrieb in einem terrestrischen Mobilfunkkommunikationssystem ausgebildet sind, das nach irgend einem beliebigen Standard betrieben wird, sofern nur die Möglichkeit besteht, dass das mobile Fernmeldeendgerät in einem für die Satellitenkommunikation vorgesehenen Frequenzband ein weiteres digitales Datensignal mit einer reduzierten Datenrate aussenden kann.

Vorzugsweise sind die Mittel zur Erzeugung des weiteren, für die Satellitenfunkkommunikation vorgesehenen Datensignals derart ausgebildet, dass das weitere Datensignal mit Trägerfrequenzen in wenigstens einem der Frequenzbänder 1610 - 1661 MHz und 1990 - 2010 MHz erzeugt werden kann. Diese Frequenzbänder sind zum einen für Uplink-Verbindungen der Satellitenfunkkommunikationssysteme Inmarsat, Thuraya, ACeS Globalstar und/oder ICO vorgesehen. Zum andern befinden sich diese Frequenzbänder frequenzmässig in der Nähe der Frequenzbänder, die für heutige terrestrische Mobilfunkkommunikationssysteme (insbesondere GSM-Systeme) benutzt werden. Die Benutzung von frequenzmässig nahe beieinander liegenden Frequenzbändern für die terrestrische Mobilfunkkommunikation einerseits und die Satellitenfunkkommunikation andrerseits erleichtert es, Gerätekomponenten eines erfindungsgemässen Fernmeldeendgeräts für die Datenübertragung zu terrestrischen Mobilfunkkommunikationssystemen einerseits und zu Satelliten andrerseits gemeinsam zu verwenden. Grundsätzlich ist jedoch für das weitere, für die Satellitenfunkkommunikation vorgesehene Datensignal auch die Benutzung von Trägerfrequenzen in anderen für die Satellitenfunkkommunikation vorgesehenen Frequenzbändern möglich. Vorteilhafterweise werden jeweils für die Trägerfrequenz des weiteren Datensignals Frequenzen ausgewählt, auf denen der durch andere Funkdienste verursachte kumulative Störpegel auf der Erde (vom Satelliten aus gesehen) niedrig ist, d.h. Frequenzen mit niedriger äquivalenter Rauchtemperatur.

Vorteilhafterweise weist ein mobiles Fernmeldeendgerät gemäss der Erfindung Datenübertragungsmittel auf, welche es ermöglichen, die Daten einer SMS- und/oder einer E-Mail-Nachricht mittels des weiteren Datensignals zum Satelliten zu übertragen. In diesem Fall kann, wenn das mobile Fernmeldeendgerät sich ausserhalb des Abdeckungsbereichs eines terrestrischen Mobilfunkkommunikationssystems befindet, zu dem es Zugang hat, ein SMS oder ein E-Mail mittels des weiteren Datensignals über einen Satelliten verschickt werden, und zwar selbst dann, wenn die Übertragungskapazität über das weitere Datensignal für die Telefonie in üblicher Sprachqualität nicht gross genug ist. In vielen Fällen, insbesondere in Notfällen, kann nämlich bereits die Möglichkeit zur Kommunikation per SMS oder per E-Mail sehr vorteilhaft sein, selbst wenn eine Sprachkommunikation nicht möglich ist.

Vorzugsweise ist das Fernmeldeendgerät mit Mitteln versehen, welche eine einfache und benutzerfreundliche Erstellung von SMS- oder E-Mail-Nachrichten ermöglichen. Solche Mittel können z.B. einen mittels der Tastatur des Fernmeldeendgeräts zu bedienenden Text-Editor oder eine Spracherkennungseinrichtung umfassen, welche die automatische Erfassung von gesprochener Sprache und deren Umwandlung in Text sowie die Möglichkeit zur manuellen Nachbearbeitung des Textes gewährleistet.

Die Datenübertragungsmittel für die Datenübertragung des weiteren Datensignals zum Satelliten können aber auch ausgebildet sein, um die Daten von anderen Diensten zu übertragen, die mit vergleichsweise geringen Datenmengen auskommen. Nebst SMS und E-Mail sind dies z.B. voice-mail, Paging mit Empfangsbestätigung oder Telefonie mit extrem hoher Datenkompression und geringer Sprachqualität für besondere Situationen.

Gemäss einer weiteren bevorzugten Ausführungsart der Erfindung ist das mobile Fernmeldeendgerät weiter mit Mitteln zum Empfangen eines Satelliten-Downlink-Pilotsignals und mit Anzeigemitteln für eine flinke Anzeige der Empfangsqualität (insbesondere der Signalstärke) dieses Satelliten-Downlink-Pilotsignals versehen. Diese Empfangs- und Anzeigemittel sind derart ausgebildet, dass mittels der angezeigten Empfangsqualität eine Optimierung der Lage und/oder der Ausrichtung der Antennenvorrichtung des Fernmeldeendgeräts während dem Aussenden des weiteren Datensignals ermöglicht wird. Für all diejenigen Dienste wie z.B. SMS, E-Mail,voice-mail und Paging mit Empfangsbestätigung, für die während dem Sendebetrieb das Fernmeldeendgerät nicht am Ohr des Benutzers gehalten werden muss, hat der Benutzer dann die Möglichkeit, laufend die Downlink-Signalqualitätsanzeige auf den z.B. im Geräte-Display integrierten Anzeigemitteln zu beobachten und entsprechend die Lage sowie die Ausrichtung des Fernmeldeendgeräts zu optimieren, insbesondere auch während dem Aussenden des weiteren Datensignals für die Datenübertragung zum Satelliten. Für den Fall, dass über das weitere Datensignal Telefoniedaten mit extrem hoher Datenkompression und geringer Sprachqualität für besondere Situationen übertragen werden sollen, ist das Fernmeldeendgerät vorteilhafterweise weiter mit einer Kopfhörer und Mikrofon umfassenden Freispecheinreichtung versehen, um ein Optimieren der Lage und der Ausrichtung des Fernmeldeendgeräts auch während dem Telefonieren zu ermöglichen.

Ein mobiles Fernmeldeendgerät gemäss der Erfindung kann ein mobiles Funktelefon, insbesondere ein Handfunktelefon sein, das zur Übertragung von Sprache in Echtzeit (d.h. für die Telefonie) in gewohnter Sprachqualität in einem terrestrischen Mobilfunkkommunikationssystems ausgebildet ist. Solche Geräte erfreuen sich einer grossen Beliebtheit und sind weit verbreitet. Sie werden in Grossserien hergestellt und sind entsprechend kostengünstig. Da gebräuchliche Handfunktelefone nur vergleichsweise geringfügig modifiziert werden müssen, um sie gemäss der Erfindung auszubilden, sind erfindungsgemässe mobile Fernmeldeendgeräte in Form von - Handfunktelefonen ebenfalls vergleichsweise kostengünstig.

Vorteilhafterweise wird vor dem Aussenden einer Nachricht mittels eines mobilen Fernmeldeendgeräts gemäss der Erfindung zunächst überprüft, ob sich das mobile Fernmeldeendgerät in einem Abdeckungsbereich eines terrestrischen Mobilfunkkommunikationssystems befindet, zu dem es Zugang hat. Zutreffendenfalls wird die Nachricht vorteilhafterweise mittels der digitalen Sprach- und/oder Datensignale zum terrestrischen Mobilfunkkommunikationssystem ausgesendet. Dessen Benutzung ist in der Regel wesentlich kostengünstiger als die Benutzung eines Satellitenfunkkommunikationssystems. Andernfalls, d.h., wenn das mobile Fernmeldeendgerät keinen Zugang zu einem terrestrischen Mobilfunkkommunikationssystem hat, wird die Nachricht mittels des weiteren Datensignals zum Satellitenfunkkommunikationssystem ausgesendet. Vorzugsweise wird im letztgenannten Fall vor dem Aussenden der Nachricht zum Satellitenfunkkommunikationssystem zunächst noch überprüft, ob sich das mobile Fernmeldeendgerät in einem Abdeckungsbereich eines Satellitenfunkkommunikationssystems befindet, zu dem es Zugang hat und, falls dies nicht der Fall sein sollte, das Aussenden der Nachricht verzögert, bis festgestellt wird, dass das mobile Fernmeldeendgerät Zugang entweder zu einem Satellitenfunkkommunikationssystem oder zu einem terrestrischen Mobilfunkkommunikationssystem hat. Die Überprüfung der Verfügbarkeit und die entsprechende Auswahl des Funkkommunikationssystems kann durch den Benutzer gesteuert oder automatisch erfolgen.

Vorzugsweise wird für das Aussenden des weiteren Datensignals mit reduzierter Datenrate zum Satelliten ein spezielles robustes Übertragunsgsverfahrens für die langsame Datenübertragung verwendet. Die Datenübertragung kann z.B. auf der Basis einer codierten m-ären orthogonalen Signalisierung mit empfangsseitig nichtkohärenter Detektion erfolgen.

Die nachfolgende detaillierte Beschreibung einer bevorzugten Ausführungsart der vorliegenden Erfindung dient in Verbindung mit den beiliegenden Zeichnungen nur als Beispiel für ein besseres Verständnis der Erfindung und ist nicht als Einschränkung des Schutzbereichs der vorliegenden Erfindung, wie sie in den Patentansprüchen definiert wird, aufzufassen. Für den Fachmann sind aus der nachfolgenden Beschreibung in Verbindung mit der beiliegenden Zeichnung und der Gesamtheit der Patentansprüche weitere vorteilhafte Ausführungsarten und Merkmalskombinationen ohne weiteres erkennbar, die jedoch immer noch innerhalb des Bereichs der vorliegenden Erfindung liegen.

### Kurze Beschreibung der Zeichnung

Die zur Erläuterung des Ausführungsbeispiels verwendeten Zeichnungen zeigen:
- Fig. 1: ein mobiles Funktelefon gemäss einer bevorzugten Ausführungsart der Erfindung in einer vereinfachten, schematischen Darstellung;
- Fig. 2: ein vereinfachtes, schematisches Blockdiagramm der Funktionseinheiten des Funktelefons aus Fig. 1.

Grundsätzlich sind in den Figuren gleiche Teile mit gleichen Bezugszeichen versehen.

### Wege zur Ausführung der Erfindung

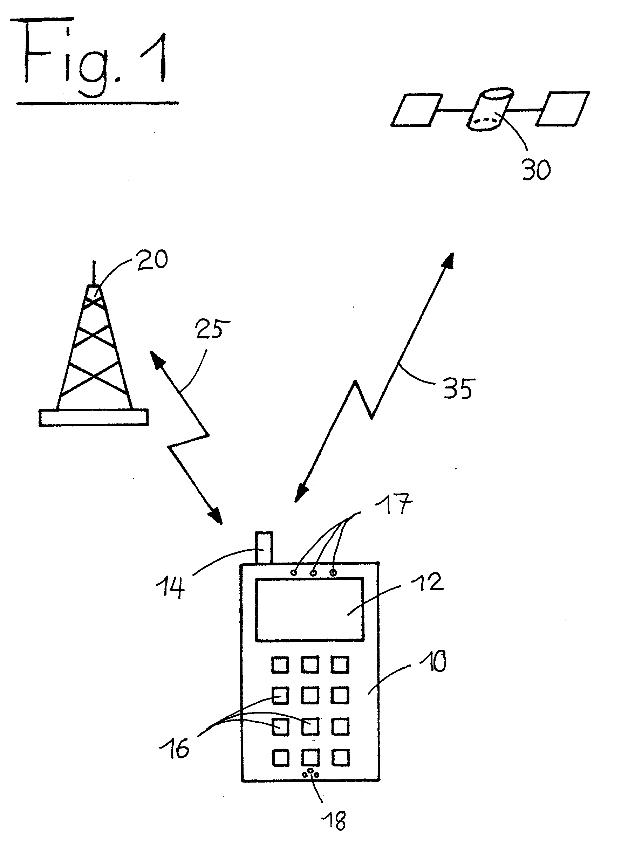

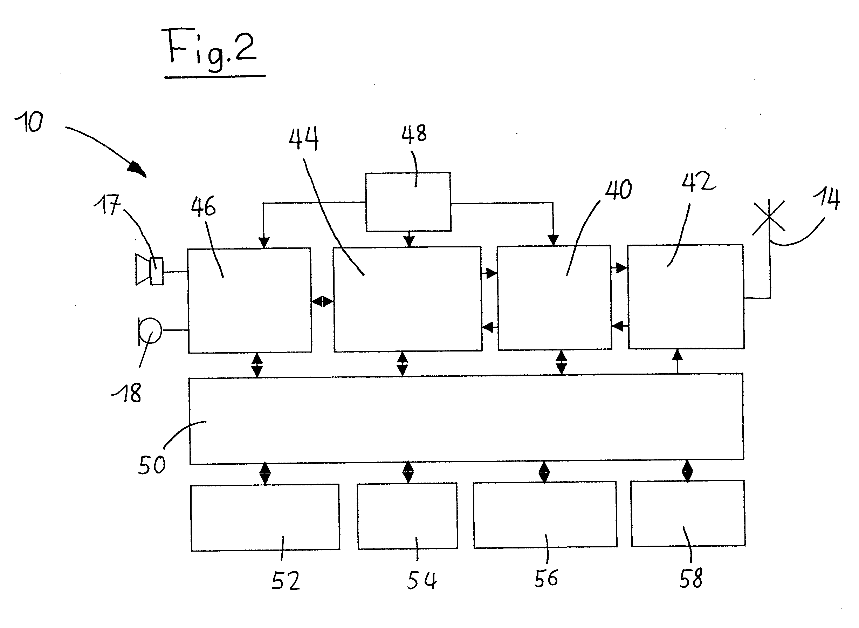

Das in Fig. 1 und 2 dargestellte mobile Fernmeldeendgerät ist ein Handfunktelefon 10, das zur Verwendung in einem terrestrischen GSM-Mobilfunkkommunikationssystem ausgebildet ist, welches in dem für den landgestützten Mobilfunk bei 900 MHz reservierten Frequenzband betrieben wird.

Das Handfunktelefon 10 ist mit einer einzigen breitbandigen, auch als RF-Frontend 40 bezeichneten Funkeinheit versehen, die einen einzigen Sender und einen einzigen Empfänger umfasst. Über eine RF-Filtereinheit 42 mit umschaltbaren RF-Filtern für verschiedene Frequenzbänder ist das RF-Frontend 40 mit einer einzigen Mehrbandantenne 14 verbunden. Das RF-Frontend 40 ist für die Erzeugung und die Verarbeitung von RF-Signalen in verschiedenen terrestrischen Modi und Satellitenmodi ausgebildet. Es steuert zudem die RF-Filtereinheit 42, wobei es in Abhängigkeit des gewählten Modus zwischen verschiedenen RF-Filtern umschaltet.

Über einen softwarekonfigurierbaren Multi-Mode-Basisbandprozessor 44 ist das RF-Frontend 40 weiter mit einer Coder/Decoder-Einheit 46 für Sprachsignale verbunden, die nebst dem Codieren und Decodieren von Sprachsignalen auch für die Verschlüsselung und Entschlüsselung (englisch als "ciphering" bezeichnet) der Sprachsignale ausgebildet und mit einem Mikrofon 18 sowie mit einem Lautsprecher 17 desFernmeldeendgeräts 10 verbunden ist. Ein gemeinsamer Zeitgeber 48 synchronisiert die Coder/Decoder-Einheit 46, den Basisbandprozessor 44 und das RF-Frontend 40.

Das Handfunktelefon 10 ist weiter mit einem Mikroprozessor 50 zur Steuerung der Coder/Decoder-Einheit 46, des Basisbandprozessors 44, des RF-Frontends 40 und der RF-Filtereinheit 42 versehen. Dieser Steuerungsprozessor 50 steuert auch den Betrieb von weiteren Komponenten des Handfunktelefons 10, so u.a. eine mit der Tastatur 16 und dem Display 12 verbundene Ein-/Ausgabeeinheit 52, eine SIM-Karten-Einheit 54, eine Schnittstelleneinheit 56 zur Datenübertragung über eine Infrarot- und eine nach dem Bluetooth-Standard betriebene Funkschnittstelle, sowie eine auf einem Flash-Eprom basierende Speichereinheit 58 zur Speicherung der Systemsoftware (englisch als "firmware" bezeichnet).

Digitale Sprachsignale, die mittels des Mikrofons 18 und der Coder/Decoder-Einheit 46 erzeugt werden, und digitale Datensignale, die mittels der Tastatur 16 und der Ein/Ausgabeeinheit 52 erzeugt werden, können mittels des RF-Frontends 40 in entsprechende RF-Signale umgewandelt werden. Mittels der Antenne 14 können diese RF-Signale über eine erste Funkübertragungsstrecke 25 zu einer Basisstation 20 des GSM-Mobilfunksystems gesendet werden. Dabei sind die vom Handfunktelefon 10 ausgesendeten Sprach- und Datensignale entsprechend dem GSM-Standard einem Trägersignal in dem für den Uplink vorgesehenen Frequenzband zwischen 890 und 915 MHz aufmoduliert. Die Antenne 14, die RF-Filtereinheit 42 und das RF-Frontend 40 des Handfunktelefons 10 sind weiter zum Empfangen von digitalen Sprach- und Datensignalen ausgebildet, die in Gegenrichtung über die erste Funkübertragungsstrecke 25 von der Basisstation 20 zum Handfunktelefon 10 gesendet werden, wobei die von der Basisstation 20 ausgesendeten Sprach- und Datensignale entsprechend dem GSM-Standard einem Trägersignal in dem für den Downlink vorgesehenen Frequenzband zwischen 935 und 960 MHz aufmoduliert sind. Die empfangenen Sprachsignale können mittels des Basisbandprozessors 44 und der Coder/Decoder-Einheit 46 zu Sprachsignalen umgewandelt und über den Lautsprecher 17 als Sprache ausgegeben werden, während die empfangen Datensignale mittels des Basisbandprozessors 44 verarbeitet und über die Ein-/Ausgabeeinheit 52 auf dem Display 12 angezeigt werden können.

Die Antenne 14 und der Empfänger des RF-Frontends 40 des Handfunktelefons 10 sind für das 900 MHz GSM-Band, d.h. für Frequenzen zwischen 890 und 960 MHz, optimiert. Weiter ist die vom Sender des RF-Frontends 40 des Handfunktelefons 10 aussendbare Leistung EIRP, wie für GSM-Handfunktelefone üblich, auf maximal 30 dBm begrenzt.

Das RF-Frontend 40 und die Antenne 14 des Handfunktelefons 10 sind zudem derart ausgebildet, dass mittels dem Sender des RF-Frontends und der Antenne 14 ein weiteres Datensignal über eine zweite Funkübertragungsstrecke 35 zu dem geostationären Telekommunikationssatelliten Thuraya 30 gesendet werden kann, wobei dieses weitere Datensignal einem Trägersignal in dem für den Satelliten-Uplink vorgesehenen Frequenzband zwischen 1610 und 1661 MHz aufmoduliert ist. Die Datenrate dieses weiteren Datensignals ist auf 100 bit/s begrenzt. Dadurch wird gewährleistet, dass das über den Sender und die Antenne 14 des Handfunktelefons 10 ausgesendete weitere Datensignal durch den Satelliten 30 einwandfrei empfangbar ist, trotz der auf 30 dBm begrenzten Leistung des Senders des RF-Frontends 40 des Handfunktelefons 10 und der für Frequenzen zwischen 890 und 960 MHz optimierten Antenne 14 des Handfunktelefons 10.

Weiter sind die Antenne 14, die RF-Filtereinheit 42 und das RF-Frontend 40 des Handfunktelefons 10 auch zum Empfangen von digitalen Sprach- und Datensignalen ausgebildet, die in Gegenrichtung über die zweite Funkübertragungsstrecke 35 vom Satelliten 30 zum Handfunktelefon 10 gesendet werden, wobei die vom Satelliten 30 ausgesendeten Sprach- und Datensignale einem Trägersignal in dem für den Satelliten-Downlink vorgesehenen Frequenzband zwischen 1525 und 1559 MHz aufmoduliert sind. Insbesondere ist auf diese Art ein vom Satelliten 30 ausgesendetes Satelliten-Downlink-Pilotsignals empfangbar. Die Signalstärke dieses Pilotsignals ist mittels flinken Anzeigemitteln auf dem Display 12 des Handfunktelefons 10 darstellbar. Dadurch wird die Möglichkeit geschaffen, anhand der im Display 12 dargestellten Signalstärke des Pilotsignals die Lage und die Ausrichtung des Handfunktelefons 10 für die Funkkommunikation zwischen dem Handfunktelefon 10 und dem Satelliten 30 zu optimieren.

Wie für heutige GSM-Handfunktelefone üblich, ist das in Fig. 1 und 2 dargestellte Handfunktelefon 10 auch für das Erstellen, das Senden, das Empfangen und die Darstellung von SMS-Nachrichten ausgebildet. Zum Zwecke der Erstellung von SMS-Nachrichten ist das Handfunktelefon 10 mit einem Text-Editor versehen, der mittels der Tastatur 16 des Handfunktelefons 10 zu bedienen ist. Auf dem Display 12 des Handfunktelefons 10 können SMS-Nachrichten als Text dargestellt werden. Mittels der über das RF-Frontend 40 und die Antenne 14 übertragbaren digitalen Datensignale können die Daten von SMS-Nachrichten über die erste Funkübertragungsstrecke 25 von und zur Basisstation 20 des GSM-Mobilfunksystems übertragen werden. Im Unterschied zu bisher bekannten GSM-Handfunktelefonen können jedoch mittels des in Fig. 1 und 2 dargestellten Handfunktelefons 10 SMS-Nachrichten nicht nur über die erste Funkübertragungsstrecke 25 von und zu der GSM-Basisstation 20, sondern zusätzlich auch über die zweite Funkübertragungsstrecke 35 von und zu dem Satelliten 30 übertragen werden, wobei zum Zwecke einer Übertragung von SMS-Nachrichten zum Satelliten 30 diese mittels des weiteren Datensignals mit einer auf 100 bit/s begrenzten Datenrate übertragen werden.

Das in Fig. 1 und 2 dargestellte Handfunkgerät 10 kann einerseits genau gleich wie ein bekanntes Handfunktelefon betrieben werden, das zur Verwendung in einem im 900 MHz Band betriebenen terrestrischen GSM-Mobilfunkkommunikationssystem ausgebildet ist. Im Unterschied zu bisher bekannten GSM-Handfunkgeräten gewährleistet das in Fig. 1 und 2 dargestellte Handfunktelefon 10 jedoch zusätzlich auch die Möglichkeit zur Kommunikation per SMS, wenn sich das Handfunktelefon 10 ausserhalb des Abdeckungsbereichs von terrestrischen Mobilfunkkommunikationssystemen befindet, zu denen es Zugang hat.

Wird beim Betrieb des in Fig. 1 und 2 dargestellten Handfunktelefons 10 die Funktion zum Senden einer SMS-Nachricht gestartet, so wird zunächst automatisch überprüft, ob sich das Handfunktelefon 10 im Abdeckungsbereich einer Basisstation 20 eines terrestrischen Mobilfunkkommunikationssystems befindet, zu dem es Zugang hat. Zutreffendenfalls wird die SMS-Nachricht dann mittels der digitalen Datensignale über die erste Funkübertragungsstrecke 25 zur Basisstation 20 ausgesendet.

Andernfalls, d.h., wenn das Handfunktelefon 10 keinen Zugang zu einem terrestrischen Mobilfunkkommunikationssystem hat, wird zunächst anhand eines Downlink-Pilotsignals, das vom Satelliten 30 kontinuierlich ausgesendet wird und mittels der Antenne 14 und des RF-Frontends 40 des Handfunktelefons 10 empfangbar und auf dem Gerätedisplay 12 darstellbar ist, überprüft, ob sich das Handfunktelefon 10 im Abdeckungsbereich des Satelliten 30 befindet. Falls dies zutrifft, wird die SMS-Nachricht mittels des weiteren Datensignals zum Satelliten 30 ausgesendet. Während dem Aussenden der SMS-Nachricht wird anhand der auf dem Display 12 dargestellten Signalstärke des Pilotsignals laufend die Lage und die Ausrichtung des Handfunktelefons 10 derart optimiert, dass die angezeigte Signalstärke möglichst gross ist. Dadurch wird die Funkübertragung zwischen dem Handfunktelefon 10 und dem Satelliten 30 optimiert. Die SMS-Nachricht wird mittels des weiteren Datensignals mit einer auf 100 bit/s reduzierten Datenrate zum Satelliten 30 gesendet, wobei ein auf einer codierten m-ären orthogonalen Signalisierung mit empfangsseitig nichtkohärenter Detektion basierendes robustes Übertragunsgsverfahrens für die langsame Datenübertragung verwendet wird.

Falls sich das Handfunktelefon 10 weder im Abdeckungsbereich des Satelliten 30 noch im Abdeckungsbereich einer Basisstation 20 eines terrestrischen Mobilfunkkommunikationssystems befindet, zu dem es Zugang hat, so wird das Aussenden der SMS-Nachricht verzögert. Sobald zu einem späteren Zeitpunkt festgestellt wird, dass das Handfunktelefon 10 Zugang entweder zum Satelliten 30 oder zu einem terrestrischen Mobilfunkkommunikationssystem hat, wird die SMS-Nachricht zu dem entsprechenden Kommunikationssystem gesendet.

Das in Fig. 1 und 2 dargestellte Handfunktelefon 10 ist mit umschaltbaren RF-Filtern in der RF-Filtereinheit 42 an der Antenne 14 versehen, um bei vergleichsweise weit auseinander liegenden Frequenzbändern jeweils die geforderte spektrale Reinheit der ausgesendeten Funksignale zu erreichen. Gemäss einer weiteren Ausführungsart der Erfindung ist ein (nicht in den Figuren dargestelltes) Handfunktelefon mit einem breitbandigen RF-Frontend und einer breitbandigen Antenne versehen, welche sämtliche Frequenzen eines terrestrischen Mobilfunkkommunikationssystems und sämtliche Frequenzen eines Satellitenkommunikationssystems abdecken, zu denen das Handfunktelefon Zugang hat.

Zusammenfassend ist festzustellen, dass durch die Erfindung ein mobiles Fernmeldeendgerät angegeben wird, das vergleichsweise klein, handlich und kostengünstig und dennoch geografisch weit verbreitet einsetzbar ist.

## Patentansprüche

1. Mobiles Fernmeldeendgerät (10) mit einer Sender- und einer Antennenvorrichtung, die zum Senden von in einem terrestrischen Mobilfunkkommunikationssystem empfangbaren digitalen Sprach- und Datensignalen ausgebildet sind, wobei die Leistung der ausgesendeten Signale eine vorgegebene maximale Sendeleistung nicht übersteigt, **dadurch gekennzeichnet, dass** das Fernmeldeendgerät (10) Mittel zur Erzeugung eines weiteren Datensignals aufweist, das eine für die Satellitenfunkkommunikation vorgesehene Trägerfrequenz und eine im Vergleich zu den Datenraten der für das terrestrische Mobilfunkkommunikationssystem ausgesendeten Signale derart reduzierte Datenrate hat, dass die Signalenergie pro Datenbit des mittels der Sender- und Antennenvorrichtung mit höchstens der maximalen Sendeleistung ausgesendeten weiteren Datensignals für den Empfang dieses Datensignals durch einen Satelliten (30) eines Satellitenfunkkommunikationssystems ausreichend ist.

2. Mobiles Fernmeldeendgerät (10) nach Anspruch 1, **gekennzeichnet durch** die Ausbildung der Mittel zur Erzeugung des weiteren Datensignals derart, dass die Signalenergie pro Datenbit des weiteren Datensignals für den Empfang dieses Datensignals **durch** einen geostationären Satelliten (30) des Satellitenfunkkommunikationssystems ausreichend ist.

3. Mobiles Fernmeldeendgerät (10) nach Anspruch 1 oder 2, **dadurch gekennzeichnet, dass** die Antennenvorrichtung lediglich eine einzige Antenne (14) aufweist, die sowohl zum Senden der im terrestrischen Mobilfunkkommunikationssystem empfangbaren digitalen Sprach- und Datensignale als auch zum Senden des durch den Satelliten (30) empfangbaren weiteren Datensignals ausgebildet ist.

4. Mobiles Fernmeldeendgerät (10) nach einem der Ansprüche 1 bis 3, **dadurch gekennzeichnet, dass** es weiter mit einer Empfängervorrichtung versehen ist, die derart ausgebildet ist, dass sowohl digitale Sprach- und Datensignale, die vom terrestrischen Mobilfunkkommunikationssystem ausgesendet werden, als auch digitale Sprach- und Datensignale, die vom Satelliten ausgesendet werden, mittels derAntennenvorrichtung und der Empfängervorrichtung empfangbar sind.

5. Mobiles Fernmeldeendgerät (10) nach Anspruch 4, **gekennzeichnet durch** eine Ausbildung der Empfängervorrichtung derart, dass die Dynamik und die Rauschzahl der Empfängervorrichtung im Wesentlichen gleich wie die Dynamik und die Rauschzahl der Empfängervorrichtung eines Fernmeldeendgeräts ist, das lediglich zur Verwendung im terrestrischen Mobilfunkkommunikationssystem ausgebildet ist.

6. Mobiles Fernmeldeendgerät (10) nach einem der Ansprüche 1 bis 5, **dadurch gekennzeichnet, dass** die Antennenvorrichtung eine zum Senden des durch den Satelliten empfangbaren weiteren Datensignals ausgebildete Antenne (14) aufweist, deren Antennengewinn kleiner als ungefähr 2 dBi, vorzugsweise kleiner als ungefähr 0 dBi, insbesondere kleiner als ungefähr -6 dBi ist.

7. Mobiles Fernmeldeendgerät (10) nach einem der Ansprüche 1 bis 6, **dadurch gekennzeichnet, dass** die maximale Sendeleistung (EIRP), die effektiv über die Sender- und Antennenvorrichtung abgestrahlt wird, kleiner als 32 dBm, vorzugsweise kleiner als ungefähr 25 dBm, insbesondere kleiner als ungefähr 14 dBm ist.

8. Mobiles Fernmeldeendgerät (10) nach einem der Ansprüche 1 bis 7, **gekennzeichnet durch** eine Ausbildung der Sendervorrichtung derart, dass die von der Sendervorrichtung ausgesendete Leistung (EIRP) kleiner als ungefähr 30 dBm, vorzugsweise kleiner als ungefähr 20 dBm ist.

9. Mobiles Fernmeldeendgerät (10) nach einem der Ansprüche 1 bis 8, **gekennzeichnet durch** die Ausbildung der Mittel zur Erzeugung des weiteren Datensignals derart, dass die Datenrate des weiteren Datensignals kleiner als ungefähr 500 bit/s, vorzugsweise kleiner als ungefähr 100 bit/s, insbesondere kleiner als ungefähr 50 bit/s ist.

10. Mobiles Fernmeldeendgerät (10) nach einem der Ansprüche 1 bis 9, **dadurch gekennzeichnet, dass** es zur Verwendung in einem nach dem GSM-Standard und/oder in einem nach dem UMTS-Standard betriebenen terrestrischen Mobilfunkkommunikationssystem ausgebildet ist und dass die Mittel zur Erzeugung eines weiteren Datensignals zur Erzeugung eines weiteren Datensignals mit einer Trägerfrequenz in wenigstens einem der Frequenzbänder 1610 - 1661 MHz und 1990 - 2010 MHz ausgebildet sind.

11. Mobiles Fernmeldeendgerät (10) nach einem der Ansprüche 1 bis 10, **dadurch gekennzeichnet, dass** es Datenübertragungsmittel aufweist, welche es ermöglichen, die Daten einer SMS- (Short Message Service) und/oder oder einer E-Mail- (Electronic Mail) Nachricht mittels des weiteren Datensignals zum Satelliten (30) zu übertragen.

12. Mobiles Fernmeldeendgerät (10) nach einem der Ansprüche 1 bis 11, **dadurch gekennzeichnet, dass** es weiter mit Mitteln zum Empfangen einesSatelliten-Downlink-Pilotsignals und mit Anzeigemitteln für eine flinke Anzeige der Empfangsqualität dieses Satelliten-Downlink-Pilotsignals derart versehen ist, dass mittels der von diesen Anzeigemitteln angezeigten Empfangsqualität eine Optimierung der Lage und/oder der Ausrichtung der Antennenvorrichtung des Fernmeldeendgeräts (10) während dem Aussenden des weiteren Datensignals ermöglicht wird.

13. Mobiles Fernmeldeendgerät nach einem der Ansprüche 1 bis 12, **dadurch gekennzeichnet, dass** das mobile Fernmeldeendgerät (10) ein mobiles Funktelefon (10) ist.

14. Verfahren für den Betrieb eines mobilen Fernmeldeendgeräts (10) nach einem der Ansprüche 1 bis 13, **dadurch gekennzeichnet, dass** vor dem Aussenden einer Nachricht mittels des Fernmeldeendgeräts (10) überprüft wird, ob sich das Fernmeldeendgerät (10) in einem Abdeckungsbereich des terrestrischen Mobilfunkkommunikationssystems befindet, zu dem es Zugang hat, worauf gegebenenfalls die Nachricht mittels der digitalen Sprach- und/oder Datensignale zum terrestrischen Mobilfunkkommunikationssystem ausgesendet wird und andernfalls die Nachricht mittels des weiteren Datensignals zu einem Satelliten (30) des Satellitenfunkkommunikationssystems ausgesendet wird, zu dem es Zugang hat.

15. Verfahren nach Anspruch 14, **dadurch gekennzeichnet, dass** im Falle eines Aussendens der Nachricht zum Satelliten (30) die Nachricht mittels eines speziellen robusten Übertragunsgsverfahrens für die langsame Datenübertragung zum Satelliten (30) übertragen wird.
